# EUROPEAN PATENT APPLICATION

(11) **EP 4 563 405 A1**
(43) Date of publication of application: **04.06.2025**
(21) Application number: 23213852.9
(22) Date of filing: 03.12.2023
(51) Int. Cl.: B60L 53/30, B60L 53/66, B60L 53/14

(54) **EMBEDDABLE COMMUNICATION MODULE FOR AN ELECTRIC VEHICLE CHARGING EQUIPMENT AND ELECTRIC VEHICLE CHARGING EQUIPMENT INCLUDING THE SAME**

(71) Applicant: HeyCharge GmbH, 80333 München (DE)
(72) Inventor: CARDE, Christopher, 80469 München (DE)
(74) Representative: DTS Patent- und Rechtsanwälte PartmbB

(57) **Abstract**

The present invention provides an embeddable communication module (10) for an electric vehicle (EV) charging equipment (100), the embeddable communication module including a processing means, configured and adapted to implement logical and functional software means, and a physical interface, wherein the processing means, the software means and the physical interface are configured and adapted for communication with a back-end system (20) for user access control management and energy consumption billing. The present invention further provides an electric vehicle (EV) charging equipment comprising, inter alia, the embeddable communication module (10) described above.

## Description

The present invention belongs to the technical field of electric vehicle (EV) charging.

EV charging stations, also known as EV chargers or electric vehicle supply equipment (EVSE) are designed to supply electric power for charging plug-in electric vehicles.

EV charging stations may be located either in private or public areas.

In particular, the invention relates to an embeddable communication module for an electric vehicle (EV) charging equipment.

The EV charging equipment may be an electric vehicle supply equipment (EVSE).

For instance, an EVSE (also referred to as "wallbox") can be a module that is applied to or comprised into a wall or the like for the purpose of supplying electric power to an electric vehicle to be charged.

In the last developments, EVSEs may be connected to a back-end, e.g., for user access control management and energy consumption billing (so called "smart" EVSEs).

Currently, the conventional approach in EV charging is the so-called Mode 3.

Here, Mode 3 EVSEs are used.

Mode 3 EVSEs are capable of implementing "smart" functionalities.

In particular, Mode 3 EVSEs may be configured and adapted for connection to a back-end system for user access control management and energy consumption billing.

Mode 3 is widely used for the purpose of EV charging in public spaces, and allows for charging up to 32 A and 250 V in single-phase while up to 32 A and 480 V in three-phase.

In particular, Mode 3 involves the use of slow or fast AC chargers and a specific EV multi-pin socket with control and protection functions (SAE J1772 and IEC 62196-2).

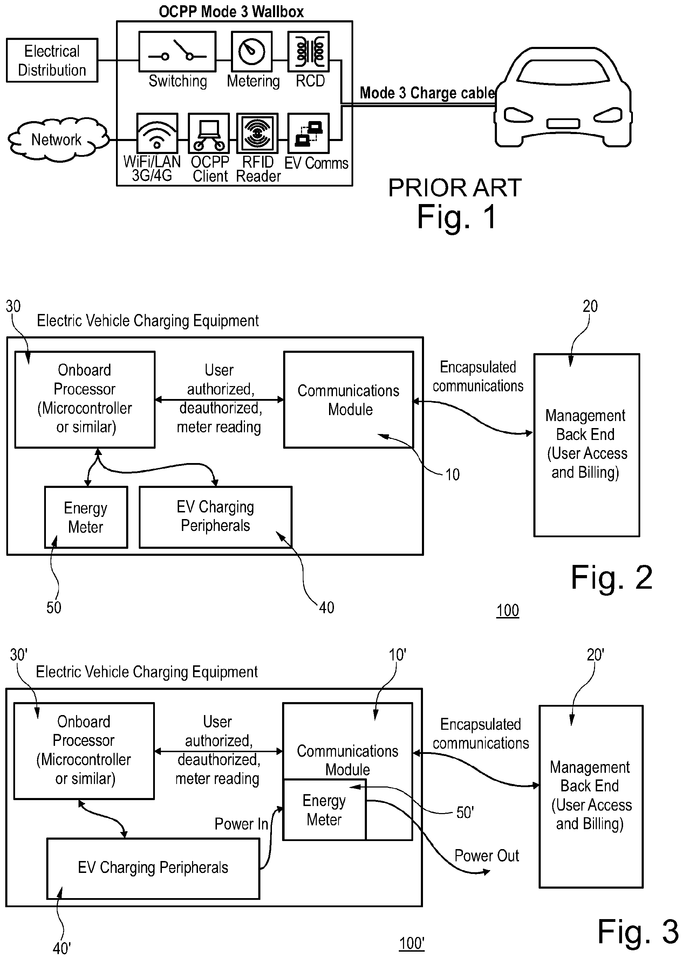

An example of a Mode 3 EV charging system including an Open Charge Point Protocol (OCPP) Mode 3 EVSE is schematically shown in **Fig. 1****.**

The electric vehicle to be charged is connected to the OCPP Mode 3 EVSE through a Mode 3 charge cable.

The Mode 3 EVSE is permanently connected to an external electric power source (e.g., the electric network).

Plugs and socket outlets that support Mode 3 are defined in IEC 61851-1.

In particular, Mode 3 implements type 2 sockets, allowing to use either a Type 1 or a Type 2 plug (the latter being the current standard in Europe).

Although effective, EV charging equipment (e.g., EVSEs) of the prior art still have some limitations.

In particular, there is room for further improvement of reliability and efficiency in the communications between the EVSE and the back-end system, which is crucial for the proper implementation of the required functionalities.

Further, there is also room for enhancement of the overall safety conditions in communications between the EVSE and the back-end system.

It is therefore an object of the present invention to provide an embeddable communication module for an electric vehicle (EV) charging equipment that allows improving reliability, efficiency and safety conditions in communications between an EV charging equipment (e.g., a "smart" EVSE) and a back-end system.

It is also an object of the present invention to provide an embeddable communication module as specified above, which can be easily manufactured and subsequently implemented in an EV charging equipment such as a "smart" EVSE.

This object is achieved by the provision of an embeddable communication module according to claim 1.

The present invention provides an embeddable communication module for EV charging equipment.

In particular, the EV charging equipment may be an EVSE configured and adapted to implement "smart" functionalities such as user access control management and energy consumption billing.

The embeddable communication module includes a processing means.

The processing means is configured and adapted to implement logical and functional software means.

Advantageously, the processing means may be a microcontroller.

The embeddable communication module further includes a physical interface.

In particular, the processing means, the software means and the physical interface are configured and adapted for communication with a back-end system for user access control management and energy consumption billing.

The embeddable communication module includes all components that are necessary for communication and access control with the back-end system.

The invention is based on the basic idea that, by providing an embeddable communication module for an EV charging equipment implemented with hardware and software means for communication with a back-end system as described above, it is possible to enhance reliability and efficiency in communications between the EV charging equipment (e.g., a "smart" EVSE) and the back-end system (e.g., a management platform). The embeddable communication module according to the invention further allows to improve the overall security conditions in communications between the EV charging equipment and the back-end system.

The embeddable communication module may be easily manufactured and subsequently implemented in an EV charging equipment such as a "smart" EVSE.

The embeddable communication module may further include an energy metering means.

This is useful in case the embeddable communication module is implemented in an EV charging equipment (e.g., an EVSE) that is not provided with embedded means for energy metering.

Advantageously, the embeddable communication module may further include a cryptography chip.

Additionally or alternatively, the embeddable communication module may further include a real time clock.

Additionally or alternatively, the embeddable communication module may further include a secure key storage (e.g., for public/private key pair for the EV charging equipment).

The processing means, the software means and the physical interface may be further configured and adapted for local communication with one or more external devices through wireless mesh network.

For instance, communication with the one or more external devices may be established to perform software updates.

Additionally or alternatively, communication with the one or more external devices may be established for distribution of most current operational data.

In particular, operational data may include one or more among:
dynamic energy pricing;
user state of charge;
energy demand signals received from vehicles via an internet service;
grid-level capacity;
constraints requiring reduction of power consumption at predefined times.

The present invention further provides an electric vehicle (EV) charging equipment.

Preferably, the EV charging equipment is an EVSE capable of implementing "smart" functionalities such as user access control management and energy consumption billing.

The EV charging equipment includes the embeddable communication module as described above.

The EV charging equipment further includes an onboard processor.

Preferably, the onboard processor is a microcontroller (MCU).

The EV charging equipment further includes EV charging peripherals.

In particular, the EV charging peripherals include a power outlet means configured and adapted for connection to an EV charge cable.

Advantageously, the power outlet means may include a socket.

The EV charge cable may be a Mode 2 charge cable.

In particular, the EV charging peripherals further include a power inlet means, configured and adapted for connection to an external electric power source (e.g., the electric network).

Advantageously, the power inlet means may include a plug.

Advantageously, the embeddable communication module can be configured and adapted to establish communication with the onboard processor through:
Universal Asynchronous Receiver-Transmitter (UART), and
a combination of Consistent Overhead Byte Stuffing (COBS) for low-level packet framing and Google^{®} protocol buffer library for high-level message construction and parsing.

The EV charging equipment may be provided with energy metering means.

Alternatively, the energy metering means may be included in the embeddable communication module.

The EV charging equipment may include a display means.

Preferably, the display means includes an LCD display means.

More preferably, the display means includes a LED display means.

Further details and advantages of the present invention shall now be disclosed in connection with the drawings, where:
**Fig. 1** is a block diagram showing a system for EV charging including an OCCP Mode 3 EVSE and a Mode 3 charge cable, according to the prior art;
**Fig. 2** is a block diagram showing an EV charging equipment including an embeddable communication module, according to a first embodiment of the invention;
**Fig. 3** is a block diagram showing an EV charging equipment including an embeddable communication module, according to a second embodiment of the invention;
**Fig. 4** is a schematic view of a circuit of the embeddable communication module of the first embodiment;
**Fig. 5** is an exemplary interaction diagram showing communication between the embeddable communication module and an on-board processor of the EV charging equipment according to either the first or second embodiment of the invention.

**Fig. 2** provides a schematic overview of an EV charging equipment 100 including an embeddable communication module 10, according to a first embodiment of the invention.

In the present embodiment, the EV charging equipment 100 is an EVSE capable of implementing "smart" functionalities such as user access control management and energy consumption billing.

The EV charging equipment 100 includes an embeddable communication module 10 as described below.

The EV charging equipment 100 further includes an onboard processor 30 (**Fig. 2**).

In the present embodiment, the onboard processor 30 is a microcontroller (MCU).

The EV charging equipment 100 further includes EV charging peripherals 40 (**Fig. 2****)**.

Not shown is that the EV charging peripherals 40 include a power outlet means configured and adapted for connection to an EV charge cable.

In the present embodiment, the power outlet means is a socket (not shown).

The charge cable may be a Mode 2 charge cable.

Not shown is that the EV charging peripherals 40 include a power inlet means, configured and adapted for connection to an external electric power source (e.g., the electric network).

In the present embodiment, the power inlet means is a plug.

Advantageously, the embeddable communication module 10 may be configured and adapted to establish communication with the onboard processor 30 through:
Universal Asynchronous Receiver-Transmitter (UART), and
a combination of Consistent Overhead Byte Stuffing (COBS) for low-level packet framing and Google^{®} protocol buffer library for high-level message construction and parsing.

Optionally, the EV charging equipment 100 may include a display means (not shown).

Preferably, the display means may include an LCD display means.

More preferably, the display mans may include a LED display means.

In the present embodiment, the EV charging equipment 100 includes an embedded energy metering means 50 for energy consumption measurement.

An embeddable communication module 10 for use in the EV charging equipment 100 according to the first embodiment will be described in the following.

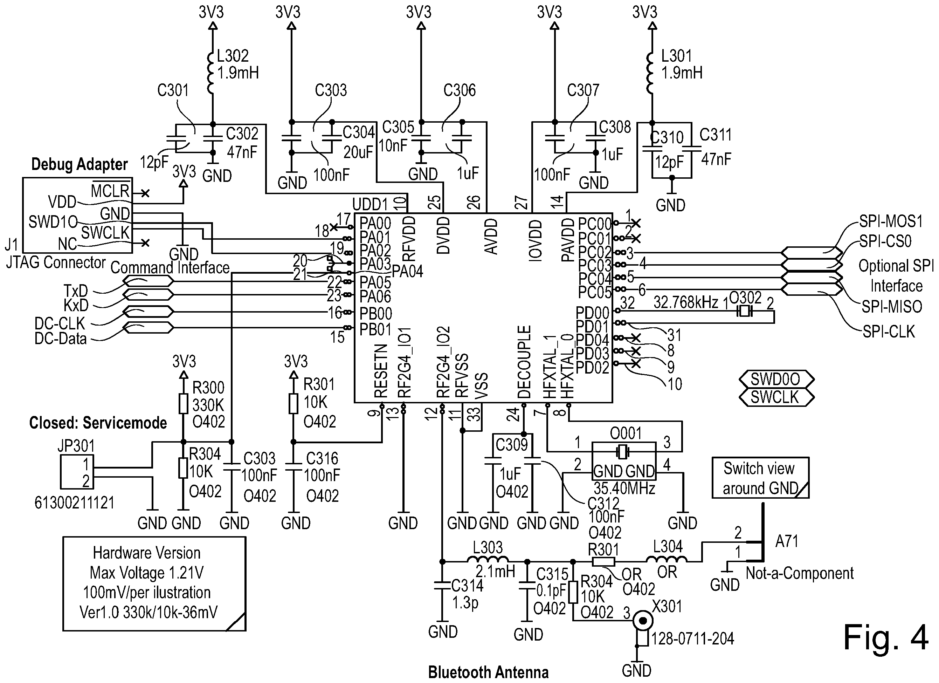

A schematic view of a circuit of the embeddable communication module 10 according to the present embodiment is shown in **Fig. 4****.**

The embeddable communication module 10 includes a processing means, configured and adapted to implement logical and functional software means.

In the present embodiment, the processing means is a microcontroller.

The embeddable communication module 10 further includes a physical interface.

In particular, the processing means, the software means and the physical interface are configured and adapted for communication with a back-end system 20 for user access control management and energy consumption billing ("smart" functionalities).

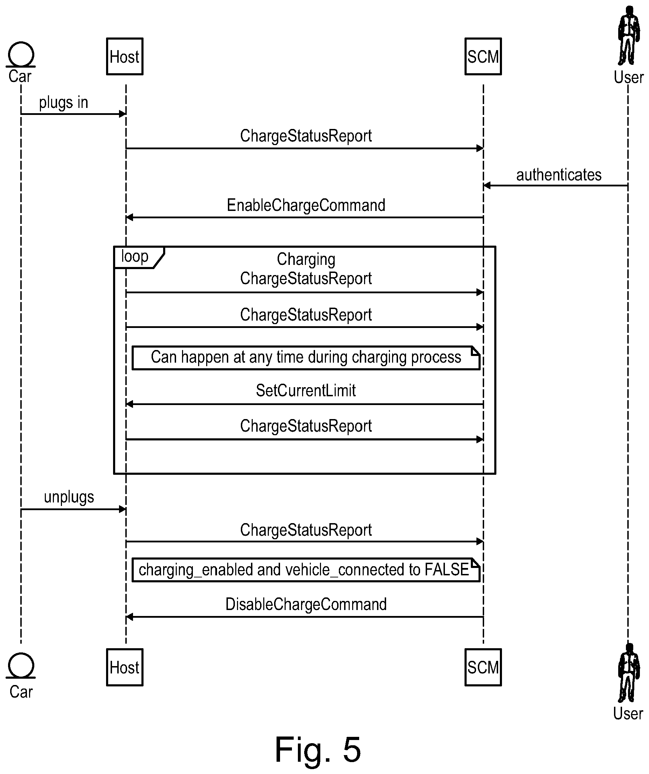

An exemplary interaction diagram showing communication between the embeddable communication module 10 and the on-board processor 30 is provided in **Fig. 5****.**

The same communications scheme analogously applies with respect to the EV charging equipment 100' according to a second embodiment of the invention, described below with reference to **Fig. 3****.**

The embeddable communication module 10 may further include a cryptography chip (not shown).

Additionally or alternatively, the embeddable communication module 10 may further include a real time clock (not shown).

Additionally or alternatively, the embeddable communication module 10 may further include a secure key storage (not shown).

Advantageously, the processing means, the software means and the physical interface of the embeddable communication module 10 may be configured and adapted for local communication with one or more external devices through a wireless mesh network.

For instance, communication with one or more external devices may be established for software updates and/or distribution of most current operational data (e.g., dynamic energy pricing, user state of charge, energy demand signals received from vehicles via an internet service, grid-level capacity, and/or constraints requiring reduction of power consumption at predefined times).

**Fig. 3** provides a schematic overview of an EV charging equipment 100' including an embeddable communication module 10', according to the second embodiment of the invention.

In the present embodiment, the EV charging equipment 100' is an EVSE capable of implementing "smart" functionalities such as user access control management and energy consumption billing.

The EV charging equipment 100' has structural features that are similar to the ones of the EV charging equipment 100 of the first embodiment.

The EV charging equipment 100' includes an embeddable communication module 10' as described below.

The EV charging equipment 100' further includes an onboard processor 30' (**Fig. 3**).

In the present embodiment, the onboard processor 30' is a microcontroller (MCU).

The EV charging equipment 100' further includes EV charging peripherals 40' (**Fig. 3**).

The EV charging peripherals 40' are the same as the EV charging peripherals 40 described above with respect to the EV charging equipment 100 of the first embodiment, and will not be described further for the sake of brevity.

Similar to the first embodiment described above, the embeddable communication module 10' may be configured and adapted to establish communication with the onboard processor 30' through:
Universal Asynchronous Receiver-Transmitter (UART), and
a combination of Consistent Overhead Byte Stuffing (COBS) for low-level packet framing and Google^{®} protocol buffer library for high-level message construction and parsing.

Also, similar to the first embodiment, the EV charging equipment 100' of the second embodiment may include a display means (not shown), preferably an LCD display means, more preferably a LED display means.

The EV charging equipment 100' of the second embodiment differs from the EV charging equipment 100 of the first embodiment in that it is not provided with embedded energy metering means for energy consumption measurement.

In particular, in this embodiment, the energy metering means 50' are provided in the embeddable communication module 10' (**Fig. 3**).

An embeddable communication module 10' suitable for use in the EV charging equipment 100' according to the second embodiment will be described in the following.

The embeddable communication module 10' includes features that are similar to the ones of the embeddable communication module 10 described above with respect to the first embodiment, and will not be described further for the sake of brevity.

Similar to the first embodiment, the embeddable communication module 10' of the second embodiment is configured and adapted for communication with a back-end system 20' for user access control management and energy consumption billing (**Fig. 3**).

The embeddable communication module 10' only differs from the embeddable communication module 10 of the first embodiment in that it is further implemented with energy metering means 50' for energy consumption measurement (**Fig. 3**).

Accordingly, the embeddable communication module 10' of the present embodiment is suitable for use in an EV charging equipment that is not provided with embedded energy metering means for energy consumption measurement.

By the provision of an embeddable module for an EV charging equipment as described above, it is possible to enhance reliability and efficiency in communications between an EV charging equipment (e.g., a "smart" EVSE) and a back-end system (e.g., a management platform).

Further, the overall safety conditions in communications between the EV charging equipment and the back-end system can be enhanced.

### References

- 100; 100': Electric vehicle (EV) charging equipment, electric vehicle supply equipment (EVSE)
- 10; 10': Embeddable communication module
- 20; 20': Back-end system
- 30; 30': Onboard processor (microcontroller)
- 40; 40': EV charging peripherals
- 50; 50': Energy metering means

## Claims

1. An embeddable communication module (10; 10') for an electric vehicle (EV) charging equipment (100; 100'), the embeddable communication module including
a processing means, configured and adapted to implement logical and functional software means, and
a physical interface,
wherein the processing means, the software means and the physical interface are configured and adapted for communication with a back-end system (20; 20') for user access control management and energy consumption billing.

2. The embeddable communication module (10') according to claim 1,
**characterized in that**
the embeddable communication module (10') further includes an energy metering means (50').

3. The embeddable communication module (10; 10') according to claim 1 or 2,
**characterized in that**
the embeddable communication module (10; 10') further includes one or more among
a cryptography chip; and/or
a real time clock; and/or
a secure key storage.

4. The embeddable communication module (10; 10') according to any one of the preceding claims,
**characterized in that**
the processing means, the software means and the physical interface are further configured and adapted for local communication with one or more external devices through wireless mesh network.

5. The embeddable communication module (10; 10') according to any one of the preceding claims,
**characterized in that**
the processing means is a microcontroller.

6. An electric vehicle (EV) charging equipment (100; 100'), including:
the embeddable communication module (10; 10') according to any one of claims 1 to 5;
an onboard processor (30; 30'), preferably a microcontroller (MCU), and
EV charging peripherals (40; 40') including
a power outlet means configured and adapted for connection to an EV charge cable, and
a power inlet means, configured and adapted for connection to an external electric power source.

7. The EV charging equipment (100; 100') according to claim 6,
**characterized in that**
the embeddable communication module (10; 10') is configured and adapted to establish communication with the onboard processor (30; 30') through:
Universal Asynchronous Receiver-Transmitter (UART), and
a combination of Consistent Overhead Byte Stuffing (COBS) for low-level packet framing and Google^{®} protocol buffer library for high-level message construction and parsing.

8. The EV charging equipment (100; 100') according to claim 6 or 7,
**characterized in that**
the EV charging equipment (100; 100') is an electric vehicle supply equipment (EVSE) for EV charging.

9. The EV charging equipment (100) according to any one of claims 6 to 8,
**characterized in that**
the EV charging equipment (100) further includes an energy metering means (50).

10. The EV charging equipment (100') according to any one of claims 6 to 8,
**characterized in that**
the embeddable communication module (10') further includes an energy metering means (50').

11. The EV charging equipment (100; 100') according to any one of claims 6 to 10,
**characterized in that**
the power inlet means includes a plug.

12. The EV charging equipment (100; 100') according to any one of claims 6 to 11,
**characterized in that**
the power outlet means includes a socket.

13. The EV charging equipment (100; 100') according to any one of claims 6 to 12,
**characterized in that**
the EV charging equipment (100; 100') further includes a display means, preferably an LCD display means, more preferably a LED display means.

14. The EV charging equipment (100; 100') according to any one of claims 6 to 13,
**characterized in that**
the EV charge cable is a Mode 2 charge cable.
